# EUROPÄISCHE PATENTSCHRIFT

(11) **EP 4 323 775 B1**
(45) Veröffentlichungstag und Bekanntmachung des Hinweises auf die Patenterteilung: **21.01.2026**
(21) Anmeldenummer: 22711465.9
(22) Anmeldetag: 08.03.2022
(51) Int. Cl.: G01P 5/06, B64F 1/20, F21W 111/00, G01P 3/44

(54) **ANEMOMETER**
ANEMOMETER
ANÉMOMÈTRE

(30) Priorität: 12.04.2021 DE 202021101938 U
(43) Veröffentlichungstag der Anmeldung: 21.02.2024
(73) Patentinhaber: Fernsteuergeräte Kurt Oelsch GmbH, 12347 Berlin (DE)
(72) Erfinder: JAHN, Volker, 15754 Heidesee (DE); KNITTER, Pawel, 12349 Berlin (DE)
(74) Vertreter: Weiße, Philip Ernst
(86) Internationale Anmeldenummer: PCT/DE2022/100185
(87) Internationale Veröffentlichungsnummer: WO 2022/218461

(56) Entgegenhaltungen:
- CN-A- 107 247 158
- CN-U- 204 903 567
- CN-U- 211 651 917
- DE-A1- 1 953 510
- GB-A- 1 012 399
- KR-B1- 101 349 086
- KR-B1- 101 349 086

## Beschreibung

### Technisches Gebiet

Die Erfindung betrifft ein Anemometer zum Messen von Windgeschwindigkeiten enthaltend:
a) ein Gehäuse und/oder Rahmen,
b) eine Welle, welche drehbar in einem Lager des Gehäuses und/oder Rahmen gelagert ist,
c) Windaufnahmemittel, welche an der Welle angeordnet sind, wobei die Windaufnahmemittel die Welle bei Wind in Rotation versetzt,
d) Erfassungsmittel zur Erfassung der Rotationsgeschwindigkeit der Welle,
e) Ausgabemittel zur Ausgabe der so erfassten Rotationsgeschwindigkeit
f) wobei das Gehäuse und/oder der Rahmen wenigstens ein elektrisches Leuchtmittel als Signalleuchte aufweisen, wobei das Leuchtmittel für den Betrieb mit Spannung einer Spannungsquelle versorgt wird. Anemometer sind Geräte zum Messen der Windgeschwindigkeit. Eines der verbreitetsten Anemometer ist das sogenannte Schalensternanemometer. Bei dem Schalensternanemometer wird die Windgeschwindigkeit mit horizontaler Drehkreisebene und senkrecht stehender Rotationsachse auf einer Welle montiertes Windrad aus mindestens zwei, meist jedoch drei oder vier halbkugelartigen Schalen vom Wind angetrieben. Dazu sind die halbkugelartigen Schalen sternförmig um eine Welle angeordnet.

Die Welle ist dabei in einem Gehäuse oder Rahmen drehbar gelagert. Der Wind greift in die halbkugelartigen Schalen und treibt so die Welle um ihre Rotationsachse an. Über die Rotationsgeschwindigkeit der Welle lässt sich die Windgeschwindigkeit ermitteln. Das Schalensternanemometer ist wegen seiner einfachen Bauweise, wegen der relativen Wartungsfreiheit und seines robusten mechanischen Aufbaus ein bevorzugtes Messsystem. Zudem arbeitet das System ohne Windrichtungsführung. Ferner ist keine aufwendige Messtechnik nötig, da unmittelbar entweder durch optische oder elektromagnetische Impulsgebung ein Signal erzeugt wird.

Es sind Schalensternanemometer bekannt, die eine mechanisch funktionierende Anzeige aufweisen, deren Umdrehungszahlen über ein Uhrwerk dargestellt werden. Nur die Windstärke bedingt die Geschwindigkeit der Rotation des Schalensterns und kann durch letztere ermittelt werden.

Für die elektromagnetische Impulsgebung ist beispielsweise ein Spannungsgenerator mit der Welle gekoppelt. Der Spannungsgenerator erzeugt eine zur Rotationsgeschwindigkeit proportionale elektrische Spannung, welche mit analogen oder auch digitalen Auswert- und Anzeigemitteln in eine Windgeschwindigkeit umgerechnet und angezeigt werden kann.

Nach einem ähnlichen Prinzip arbeitet das sogenannte Flügelrad-Anemometer. Der Wind versetzt ein Flügelrad, welches sich um eine horizontale Achse dreht, in Bewegung. Die Umdrehungsgeschwindigkeit des Flügelrades repräsentiert die Windgeschwindigkeit. Bei sehr niedrigen Windgeschwindigkeiten ist die Messung wegen der notwendigen Überwindung des Anlaufwiderstandes, der auch bei relativ niedrigen Reibungswiderständen im Drehlager des Flügelrades noch vorhanden ist, etwas ungenau. Moderne Flügelrad-Anemometer sind meist kleine handliche Geräte für den mobilen Betrieb, größere, stationäre Flügelräder mit Wetterfahne zur Nachführung desselben in die Windrichtung werden an manchen Wetterstationen eingesetzt. Sie werden ansonsten stationär zum Messen relativ schwacher Strömungen zu Forschungszwecken in Windkanälen eingesetzt.

Ferner kommen oft auch Ultraschallanemometer zum Einsatz. Die Ultraschallanemometer arbeiten nach dem Prinzip der Laufzeitmessung oder der akustischen Resonanz. Bei der Laufzeitmessung wird ausgenutzt, dass die Ultraschallwellen vom Medium, in dem sie sich ausbreiten, mitgeführt werden, sodass die Laufzeit von Signalen über eine Messstrecke fester Länge von der Durchströmung der Messstrecke abhängt. Bei der akustischen Resonanz befinden sich in einem Hohlraum mehrere schwingende Membranen, die akustische Ultraschallwellen erzeugen und empfangen. Durch die wiederholte Reflexion zwischen den Reflektoren wird eine quasistehende Welle senkrecht zur Windrichtung und eine Transversalwelle parallel zur Windrichtung erzeugt. Strömt Luft entlang der Achse zwischen den Reflektoren, beeinflusst das die Ausbreitungsgeschwindigkeit der Welle und erzeugt eine Phasenverschiebung, anhand derer sich die Windgeschwindigkeit berechnen lässt.

Es sind Leuchtfeuer bekannt, die die Position von mobilen oder unbewegten Objekten signalisieren. Bei den Leuchtfeuern handelt es sich meistens um elektrisch betriebene Beleuchtungskörper, die pulsierende oder stetig strahlende Leuchtsignale erzeugen. Diese Leuchtsignale sind oft verschiedenfarbig und haben regelmäßig auch unterschiedliche Bedeutung. Sie dienen insbesondere auch zur Positionsbestimmung eines Objekts bzw. machen auf ein Objekt an einer Position aufmerksam. Solche Leuchtfeuer werden oft bei hohen Gebäuden, Schornsteinen, Antennen, Baumaschinen, Kränen oder Kraftwerken, wie Windkraftanlagen eingesetzt. Sie signalisieren beispielsweise Flugzeugen oder Hubschraubern, dass sich dort ein hohes Objekt befindet. Aber auch in der Schifffahrt sind Leuchtfeuer, insbesondere zur Positionsbestimmung, bekannt. Im Straßenverkehr werden Leuchtfeuer bei Schwerlasttransporten verwendet.

### Stand der Technik

Die DE 36 05 462 A1 beschreibt ein Verfahren zur Sicherung einer gefahrlosen Arbeit von selbstfahrenden Auslegerkranen besteht in der Formierung von Standsicherheitssignalen von den Gebern der Stützen und Achsen und Festigkeitssignalen von den Gebern der Kranbaugruppen. Dabei können Festigkeitsgeber auch in den Stützen, Achsen montiert werden. Die Geber können auch als Neigungsmesser zur Begrenzung der Kranneigung, als Anemometer zur Begrenzung der Windeinwirkung auf den Kran u. dgl. ausgeführt werden.

Aus der DE 10 2014 000 652 A1 ist bekannt, dass eine Windenergieanlage und ein Kran auf derselben Plattform angeordnet sind. Dort wird eine Windfahne, welche mit Anemometer kombiniert ist, offenbart Das Anemometer dient dabei zur Bestimmung der Windstärke.

In der DE 20 2006 017 695 U1 wird eine Vorrichtung zur Messung der Windgeschwindigkeit offenbart. Die Messung erfolgt dabei vorzugsweise während einer Produktionsunterbrechung einer Windenergieanlage. Die Windenergieanlage ist mit einem Ausleger mit Wind-Messvorrichtungen verbundenen, der in Abhängigkeit von der Windrichtung drehbar ist. Es kommen Messgeräte in der üblichen Bauweise zu Einsatz, insbesondere mechanische Anemometer nach dem Schalensternprinzip nebst Windrichtungsgeber oder Anemometer mit akustischer Erfassung angebracht werden.

Die DE 20 2013 012 247 U1 beschreibt eine Windrichtungsmessvorrichtung. Die einsetzbaren Windrichtungsmessvorrichtungen sind beispielsweise auch auf kombinierte Windrichtungs- und -geschwindigkeitsmessvorrichtungen (Anemometer).

Kräne und sonstige Maschinen mit Auslegern sind windempfindlich. Bei zu starkem Wind muss ein Ausleger eingezogen und/oder gesichert werden. Daher wird an deren höchsten Punkt dieser Maschinen ein Anemometer zur Messung der Windgeschwindigkeit montiert. Dieses warnt beispielsweise einen Kranführer, wenn der Wind zu stürmisch für seine Maschine ist, damit er entsprechende Maßnahmen ergreifen kann. Der Platz für ein Leuchtfeuer und für ein Anemometer reicht oft nicht aus.

CN 211651917 U offenbart eine Vorrichtung zur Überwachung von Wind. Die Vorrichtung umfasst ein Windgeschwindigkeitsmessgerät, ein Trägerstab und eine Basis, die fest mit einer Betonplatte verbunden ist. Das Gerät kann Echtzeit-Winddaten sammeln, auch in abgelegenen Gebieten, und verfügt über ein Solarpanel sowie eine hydraulische Teleskopstange zur Höhenverstellung. Ein Warnlicht leuchtet bei Erreichen eines bestimmten Windgeschwindigkeitsschwellenwerts auf, was als Warnung für Luftfahrzeuge dient.

CN 107247158 A offenbart einen visuellen Windrichtungsanzeiger. Der Windrichtungsanzeiger umfasst eine Basis, eine Stütze, eine Schaltung, Leuchtdioden (LEDs), Ventilatoren, einen Generator und einen Kompass. Der Anzeiger nutzt die Helligkeit der LEDs, um die Windrichtung und -geschwindigkeit anzuzeigen, indem die Windenergie in elektrische Energie umgewandelt wird. Der Kompass stellt sicher, dass das Gerät korrekt ausgerichtet ist. Verschiedene Farben der LEDs zeigen die Windrichtung an, und die Helligkeit der LEDs variiert je nach Windgeschwindigkeit.

CN 204903567 U beschreibt ein Windschalen-Anemometer mit Warnlicht. Es besteht aus einem Gehäuse, Windschalen, einem Sensor zur Windgeschwindigkeitsmessung und einer LED-Platine mit mehreren LEDs. Die LEDs dienen als Warnleuchten, die durch einen lichtempfindlichen Schalter gesteuert werden können, um Strom zu sparen. Das Anemometer soll die Sicherheit verbessern, indem es durch die Warnlichter auf mögliche Gefahren hinweist.

GB 1012399 A beschreibt ein kombiniertes Windrichtungs- und Windgeschwindigkeitsanzeigegerät, das speziell für die Montage am Mastkopf kleiner Boote konzipiert ist. Es umfasst eine Windfahne, die je nach ihrer Winkelposition eine von acht Lampen zur Windrichtungsanzeige aktiviert, sowie Anemometer-Schalen, die die Windgeschwindigkeit auf einem Voltmeter anzeigen.

DE 1953510 A1 beschreibt einen Strömungsmesser, der zur Messung der Strömungsgeschwindigkeit in Flüssen und Meeren verwendet wird. Der Strömungsmesser nutzt ein Flügelrad, das auf einer Spindel gelagert ist und dessen Umdrehungen durch eine magnetische Schalteinrichtung gezählt werden. Das Flügelrad ist aus nicht-korrodierendem Kunststoff gefertigt und die Lagerung ist so konzipiert, dass sie axial und radial frei beweglich ist. Die Konstruktion ermöglicht eine neutrale Auftriebseigenschaft und eine Selbstjustierung des Geräts in der Strömung.

### Offenbarung der Erfindung

Aufgabe der Erfindung ist es daher, die Nachteile des Standes der Technik zu vermeiden und ein Anemometer zu schaffen, das flexibel an verschiedenen beweglichen Strukturen montiert werden kann und dabei auch unter wechselnden Neigungs- und Bewegungsbedingungen präzise und zuverlässige Messungen der Windgeschwindigkeit ermöglicht.

Erfindungsgemäß wird die Aufgabe dadurch gelöst, dass bei einem Anemometer zum Messen von Windgeschwindigkeiten der eingangs genannten Art
g) Befestigungsmittel zur Befestigung an einem bewegbaren Objekt vorgesehen sind,
h) eine Schwenkvorrichtung mit einer horizontalen Schwenkachse vorgesehen ist, um welche das Anemometer schwenkbar gelagert ist, wobei ein Pendelgewicht als Gegengewicht vorgesehen ist. Anemometer befinden sich regelmäßig an der höchsten Stelle eines Objekts, wie beispielsweise ein hohes Gebäude oder ein Kran. Dort sind sowohl das Anemometer, als auch das Leuchtfeuer angeordnet, welches Dritte, wie Flugzeuge, auf das Objekt aufmerksam macht. Die Erfindung beruht auf dem Prinzip, die zwei Geräte zu kombinieren. Hierdurch wird einerseits Platz an der höchsten Stelle des Objekts gespart und andererseits zwei Funktionen sinnvoll miteinander vereint. Außerdem kann einerseits der Wind ungehindert an das Anemometer anströmen und andererseits wird das Licht des Leuchtfeuers nicht von dem Anemometer abgeschattet. Das abgestrahlte Licht kann so ungehindert in alle gewünschten Richtungen abstrahlen.

In einer vorteilhaften Ausgestaltung des erfindungsgemäßen Anemometers ist das Anemometer als Schalensternanemometer ausgebildet, wobei die Windaufnahmemittel als halbkugelartige Schalen ausgebildet sind. Ein Schalensternanemometer ist mechanisch besonders einfach aufgebaut, robust und wenig störanfällig. Dadurch lässt sich die Erfindung bei solchen Anemometern gut realisieren.

Als vorteilhafte Alternative zu dem Schalensternanemometer ist das Anemometer als Flügelrad-Anemometer ausgebildet ist, wobei die Windaufnahmemittel als flügel- oder turbinenartige Schaufel ausgebildet sind. In einigen Anwendungsfällen kann es sinnvoll sein, ein Schalensternanemometer zu nicht verwenden. In solchen Fällen kann das Flügelrad-Anemometer die bessere Wahl sein. Während bei dem Schalensternanemometer das Windrad auch für ungewollte Umwelteinflüsse, wie beispielsweise Hagel oder Schnee, frei zugänglich ist, lässt sich ein Flügelrad-Anemometer besser gegen solche Umwelteinflüsse schützen. Dies kann ggf. verhindern, dass das Flügelrad beschädigt wird.

Eine weitere vorteilhafte Ausbildung des erfindungsgemäßen Anemometers wird dadurch erzielt, dass das Leuchtmittel als LED ausgebildet ist. Eine LED verbraucht relativ wenig Energie. Trotzdem wird eine hohe Leuchtkraft mit hohem Wirkungsgrad und hoher Lebensdauer mit diesem Leuchtmittel erreicht.

In einer weiteren bevorzugten Ausbildung des erfindungsgemäßen Anemometers ist das Leuchtmittel mehrfarbig leuchtend ausgestaltet. Durch diese Maßnahme wird erreicht, dass mit dem Leuchtfeuer unterschiedliche Signale ausgegeben werden können. So kann beispielsweise bei einem Schiff zwischen Backbord und Steuerbord unterschieden werden, wenn an den entsprechenden Seiten des Schiffs solche Anemometer montiert sind.

Vorzugsweise sind bei dem erfindungsgemäßen Anemometer elektronische Steuerungsmittel vorgesehen, die die Leuchtdauer und Farbe des Leuchtmittels steuern. Diese Maßnahme bewirkt, dass einerseits die Farbe des Leuchtmittels selektiert werden kann und andererseits die Leuchtdauer festgelegt werden kann. Hierdurch lässt sich beispielsweise in einer bestimmten Farbe, wie rot oder grün, signalisierend blinken. Aber auch ein grelles weißes Blitzlicht lässt sich so grundsätzlich erzeugen.

Eine weitere vorteilhafte Ausgestaltung der Erfindung besteht darin, dass wenigstens zwei Leuchtmittel vorgesehen sind, welche gleichzeitig oder wechselseitig angesteuert werden. Durch diese Maßnahme kann insbesondere die abgestrahlte Lichtintensität auf einfache Weise variiert werden. Leuchten beide Leuchtmittel gleichzeitig wird die Intensität erhöht. Entsprechend wird die Intensität und auch der Energieverbrauch reduziert, wenn nur eine der beiden Leuchtmittel angesteuert wird. Sofern in einem vorteilhaften Aspekt beide Leuchtmittel gleichzeitig mit reduzierter Leistung angesteuert werden, kann die Haltbarkeit der Leuchtmittel erhöht werden. Auch der Ausfall eines der beiden Leuchtmittel erlaubt immer noch, dass die Funktion als Leuchtfeuer hinreichend gewährleistet ist. Es können auch zwei oder mehr Leuchtmittelgruppen vorgesehen sein, die jeweils für sich genommen eine 360°-Abstrahlung des Leuchtfeuers ermöglichen.

Eine besondere Ausgestaltung des erfindungsgemäßen Anemometers besteht darin, dass die Spannungsquelle einen Akkumulator umfasst. Diese Maßnahme dient dazu, die Leuchtmittel autark, d.h. zumindest zeitweilig, und unabhängig von einer Festnetzspannungsversorgung oder einem Spannungsgenerator zu betreiben.

In einer bevorzugten Ausbildung des erfindungsgemäßen Anemometers enthält die Spannungsquelle ein Solarmodul zur Spannungserzeugung. Das Solarmodul kann elektrische Energie erzeugen. Diese Energie kann entweder direkt an das Leuchtmittel als Verbraucher weitergegeben oder in einem Akkumulator gespeichert werden, sodass sie zu einem anderen Zeitpunkt verwendet werden kann. So kann beispielsweise tagsüber mit dem Solarmodul elektrische Energie erzeugt werden, welche in dem Akkumulator gespeichert wird, und nachts kann diese gespeicherte Energie von dem Leuchtmittel verbraucht werden.

Erfindungsgemäß sind Befestigungsmittel zur Befestigung an einem Objekt vorgesehen.

Erfindungsgemäß ist eine Schwenkvorrichtung mit einer horizontalen Schwenkachse vorgesehen, um welche das Anemometer schwenkbar gelagert ist, wobei ein Pendelgewicht als Ausgleichs- bzw. Gegengewicht vorgesehen ist. Diese Maßnahme ermöglicht es, dass sich die die Windaufnahmemittel des Anemometers immer horizontal ausrichten lassen sind. Selbst wenn sich das Objekt bewegt, an dem das Anemometer befestigt ist, bleibt die Rotationsachse senkrecht. Die vertikale Abstrahlcharakteristik des Leucht- bzw. Hindernisfeuers bleibt zudem unabhängig vom Neigungswinkel erhalten. Dabei sollte das Pendel - insbesondere im Hinblick auf Strömungswiderstand und Gewicht - so ausgestaltet sein, dass sich das Anemometer auch bei Wind nicht neigt.

In einer weiteren vorteilhaften Ausgestaltung des erfindungsgemäßen Anemometers ist ein Dämmerungs- und/oder Näherungssensor zur Betätigung des Leuchtmittels vorgesehen ist. Damit wird bewirkt, dass erst einschaltet, wenn es dunkel wird und/oder wenn sich ein anderes Objekt nähert. Hierdurch lässt sich Energie sparen, die besonders bei autarken Anemometern, die ihre Energie z.B. von einem Akkumulator bzw. Solarmodul beziehen, benötigt wird.

Weitere Ausgestaltungen und Vorteile ergeben sich aus dem Gegenstand der Unteransprüche sowie den Zeichnungen mit den dazugehörigen Beschreibungen. Ausführungsbeispiele sind nachstehend unter Bezugnahme auf die beigefügten Zeichnungen näher erläutert. Die Erfindung soll nicht alleine auf diese aufgeführten Ausführungsbeispiele beschränkt werden. Sie dienen lediglich zur näheren Erläuterung der Erfindung. Die Erfindung wird durch die angehängten Ansprüche definiert.

### Kurze Beschreibung der Zeichnung

- Fig. 1: zeigt in einer schematischen Hinteransicht ein Ausführungsbeispiel eines erfindungsgemäßen Anemometers mit Leuchtfeuer.
- Fig. 2: zeigt in einer schematischen Seitenansicht das Anemometer mit Leuchtfeuer gemäß Fig. 1.
- Fig. 3: zeigt in einer Prinzipskizze das Anemometer mit Leuchtfeuer gemäß Fig. 1 und 2 in einer Draufsicht.
- Fig. 4a: zeigt in einer schematischen Prinzipskizze das Leuchtfeuer des erfindungsgemäßen Anemometers mit zwei räumlich alternierenden Leuchtgruppen mit Leuchtmitteln im Normalbetrieb.
- Fig. 4b: zeigt gemäß Fig. 4a zwei räumlich alternierenden Leuchtgruppen bei denen nur die erste Leuchtgruppe leuchtet.
- Fig. 4c: zeigt gemäß Fig. 4a bzw. 4b zwei räumlich alternierenden Leuchtgruppen bei denen nur die zweite Leuchtgruppe leuchtet.

### Bevorzugtes Ausführungsbeispiel

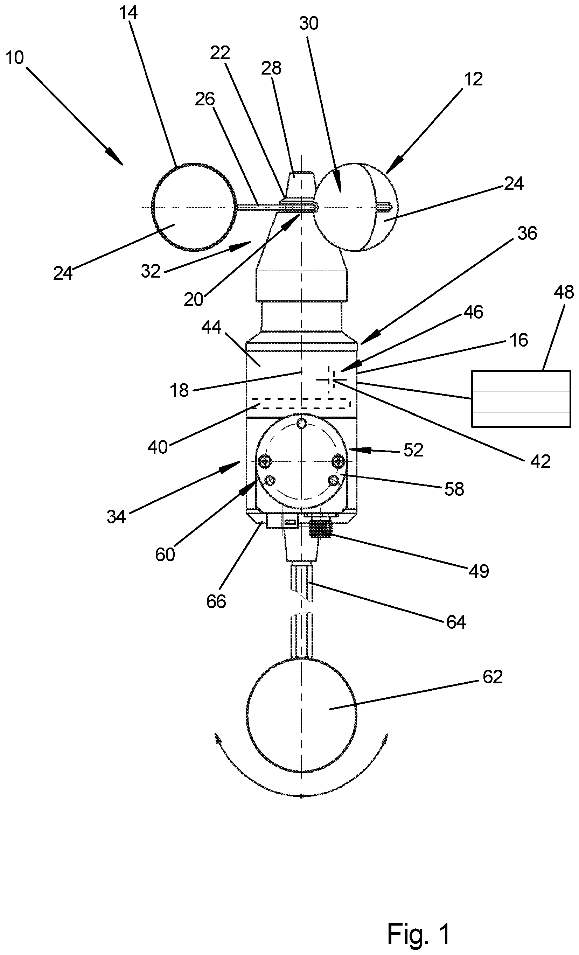

In Fig. 1 wird in einer Prinzipskizze ein Anemometer 10 in einer schematischen Hinteransicht dargestellt. Das Anemometer 10 ist als Schalensternanemometer ausgebildet und weist ein als Windrad 12 ausgestaltete Windaufnahmemittel 14 sowie ein Gehäuse 16 auf. In einer Drehkreisebene 17 und einer senkrecht stehenden Rotationsachse 18 ist das Windrad 12 auf einer Welle 20 mit Befestigungsmitteln 22 fest montiert. Das Windrad 12 besteht im vorliegenden Ausführungsbeispiel aus drei halbkugelartigen Schalen 24, welche mit Speichen 26 über eine Nabe 28 mit der Welle 20 verbunden sind. Die Welle 20 ist in dem Gehäuse 16 drehbar gelagert. Offene Seiten 30 der drei halbkugelartigen Schalen 24 zeigen auf dem Drehkreis in die gleiche Richtung.

Das Gehäuse 16 lässt sich in drei Gehäuseabschnitte 32, 34, 36 unterteilen. Der oberste Abschnitt 32 umfasst die Windaufnahmemittel 14. Der unterste Abschnitt 34 bildet einen zentralen Hauptkörper 38, in dem Elektronik 40, Akkumulatoren 42 und mechanische Elemente insbesondere Erfassungsmittel 43 zur Erfassung der Rotationsgeschwindigkeit ω der Welle 20 vorgesehen sind. In dem mittleren Abschnitt 36 ist ein elektrisches Leuchtmittel 44 vorgesehen, welches seine Spannung von einer Spannungsquelle 46, wie dem Akkumulator 42 im Gehäuse 16, erhält. Dieses Leuchtmittel 44, auch Leuchtfeuer oder Signalgeber genannt, wird von der Elektronik 40 nach Bedarf als Signalleuchte geschaltet. Ein Dämmerungssensor 47 schaltet das Leuchtmittel 44 ein, sobald es dunkel wird, um seine Signal- und Warnwirkung für das jeweilige Objekt zu entfalten. Die Elektronik ist dazu prozessorgesteuert und erhält ihre elektrische Spannung ebenfalls von der Spannungsquelle 46. Um ein Blinken oder ein sonstiges Signal zu erzeugen, welches von der Signaldauer abhängig ist, kann die Steuerelektronik 40 das Leuchtmittel 44 entsprechend schalten.

Die Akkumulatoren 42 können von einem Solarmodul 48 geladen werden. Das Solarmodul 48 kann dazu an einem geeigneten Ort eines Objekts angebracht sein. Das Leuchtmittel 44 besteht aus LEDs, bevorzugt mit unterschiedlichen Farben. Die Farben des Leuchtmittels 44 werden von der Elektronik 40 nach Bedarf angesteuert. Eine Schnittstelle 49 dient zur Übertragung von Signalen oder Daten, die bei der Windmessung durch das Anemometer 10 erhalten werden oder um die Elektronik von extern zu steuern bzw. zu programmieren.

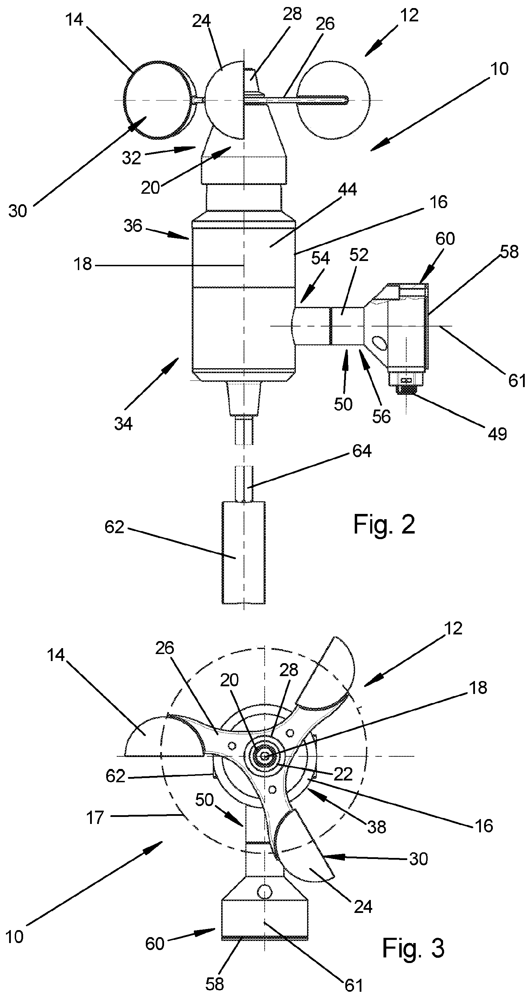

An dem zentralen Hauptkörper 38 ist eine Schwenkvorrichtung 50 vorgesehen. Die Schwenkvorrichtung 50 umfasst einen zylinderförmigen Körper 52 an dessen einem ersten Ende 54 der zentrale Hauptkörper 38 schwenkbar gelagert ist (siehe Fig. 2 u. 3). An dem anderen Ende 56 des zylinderförmigen Körpers 38 ist ein Befestigungsflansch 58 und die Schnittstelle 49 vorgesehen. Der Befestigungsflansch 58 dient als Befestigungsmittel 60, um das Anemometer 10 über die Schwenkvorrichtung 50 an einem Objekt zu befestigen. Die Befestigungsmittel 60 können beispielsweise geschweißt, geklebt, geschraubt, genietet oder an dem Objekt festgeklemmt werden.

Damit das Anemometer 10 nicht bei auftretendem Wind zur Seite um die Schwenkachse 61 der Schwenkvorrichtung 50 wegschwingt, ist ein Pendelgewicht 62 als Gegengewicht zum Anemometer 10 vorgesehen. Das Pendelgewicht 62 ist über einen Stab 64 mit dem Boden 66 des Gehäuses 16 fest und starr verbunden. Durch das Pendelgewicht 62 wird die Rotationsachse 18 des Anemometers 10 weitestgehend in der Vertikalen gehalten. Das Windrad 12 verbleibt hierdurch in seiner horizontalen Position.

Die Fig. 2 zeigt in einer schematischen Seitenansicht das Anemometer 10 mit dem Leuchtfeuer 44 gemäß Fig. 1. Sofern die Abbildungen sich entsprechen, werden daher auch die gleichen Bezugszeichen verwendet.

Das Anemometer 10 ist dementsprechend ebenfalls als Schalensternanemometer ausgebildet. In der Drehkreisebene 17 und der dazu senkrecht stehenden Rotationsachse 18 ist das Windrad 12 auf der Welle 20 montiert. Das Windrad 12 weist die drei halbkugelartigen Schalen 24 auf, welche mit den Speichen 26 über die Nabe 28 mit der Welle 20 verbunden sind.

Das Gehäuse 16 zeigt die 3 Gehäuseabschnitte 32, 34, 36. Der oberste Gehäuseabschnitt 32 umfasst die Windaufnahmemittel 14. Der unterste Gehäuseabschnitt 34 bildet einen zentralen Hauptkörper 38. in dem Hauptkörper 38 ist die Steuerelektronik 40, die Akkumulatoren 42 und die mechanischen Elemente untergebracht. Die Steuerelektronik 40, die Spannungsquelle 46 und die mechanischen Elemente bilden dabei u.a. die Erfassungsmittel 43 zur Erfassung der Rotationsgeschwindigkeit ω der Welle 20. In dem mittleren Gehäuseabschnitt 36 ist ferner das elektrisches Leuchtmittel 44 angeordnet, welches seine Spannung von der Spannungsquelle 46 erhält. Das Leuchtmittel 44 wird von der Steuerelektronik 40 in geeigneter Weise geschaltet. Der Dämmerungssensor 47 unterstützt dabei den Schaltvorgang, so dass das Leuchtmittel 44 nur eingeschaltet wird, wenn es zu dunkeln beginnt.

Das Leuchtmittel 44 umfasst LEDs. Mit unterschiedlichen Farben des Leuchtmittels 44 können unterschiedliche Signale erzeugt werden. Das Leuchtmittel 44 wird dazu in geeigneter Weise von der Steuerelektronik 40 je nach Anwendung angesteuert. Über die Schnittstelle 49 werden die Signale und Daten, die bei der Windmessung durch das Anemometer 10 erfasst werden übertragen. Außerdem lässt sich über die Schnittstelle 49 die Steuerelektronik 40 von extern zu steuern bzw. zu programmieren.

An dem zentralen Hauptkörper 38 ist die Schwenkvorrichtung 50 montiert. Der zentrale Hauptkörper 38 ist über den zylinderförmigen Körper 52 der Schwenkvorrichtung 50 schwenkbar gelagert ist. Der zylinderförmige Körper 38 ist mit dem Befestigungsflansch 58 an einem nicht dargestellten Objekt befestigt. Das Befestigungsmittel 60 umfasst dabei den Befestigungsflansch 58, womit das Anemometer 10 an dem Objekt befestigt ist.

Das Pendelgewicht 62 verhindert als Gegengewicht, dass das Anemometer 10 bei auftretendem Wind zur Seite um die Schwenkachse 61 schwingt. Dazu ist das Pendelgewicht 62 mit dem Stab 64 an dem Boden 66 des Gehäuses 16 fest und starr verschraubt. Durch das Pendelgewicht 62 wird die Rotationsachse 18 des Anemometers 10 weitestgehend in der Vertikalen gehalten. Das Windrad 12 verbleibt hierdurch in seiner horizontalen Position.

Fig. 3 zeigt in einer Prinzipskizze das Anemometer 10 mit Leuchtfeuer 44 gemäß Fig. 1 und 2 in einer Draufsicht. Sofern die Abbildungen sich entsprechen, werden daher auch die gleichen Bezugszeichen verwendet.

In der Drehkreisebene 17 und der dazu senkrecht stehenden Rotationsachse 18 des Schalensternanemometers 10 ist das Windrad 12 auf der Welle 20 aufgesteckt. Beim Drehen des Windrades 12 wird die Welle 20 in die Rotationsbewegung mitgenommen. Das Windrad 12 weist die drei halbkugelartigen Schalen 24 auf, welche mit den Speichen 26 über die Nabe 28 mit der Welle 20 drehfest verbunden sind.

Die Schwenkvorrichtung 50 ist mit den Befestigungsmitteln 60 an einem Objekt befestigt. An der Schwenkvorrichtung 50 ist der zentrale Hauptkörper 38 des Anemometers 10 schwenkbar gelagert. Die Befestigungsmittel 60, wozu auch der Befestigungsflansch 58 gehört, sind gegenüber dem Objekt starr und unbeweglich verbunden. Das Gehäuse 16 des Anemometers 10 kann somit entsprechend geschwenkt werden.

Das Pendelgewicht 62 verhindert, dass das Anemometer 10 bei auftretendem Wind zur seitlich um die Schwenkachse 61 wegkippt. Deswegen ist das Pendelgewicht 62 mit dem Stab 64 an dem Boden 66 des Gehäuses 16 fest und starr verschraubt. Durch das Pendelgewicht 62 wird die Rotationsachse 18 des Anemometers 10 weitestgehend in der Vertikalen stabil gehalten. Das Windrad 12 selbst verbleibt hierdurch in seiner horizontalen Position.

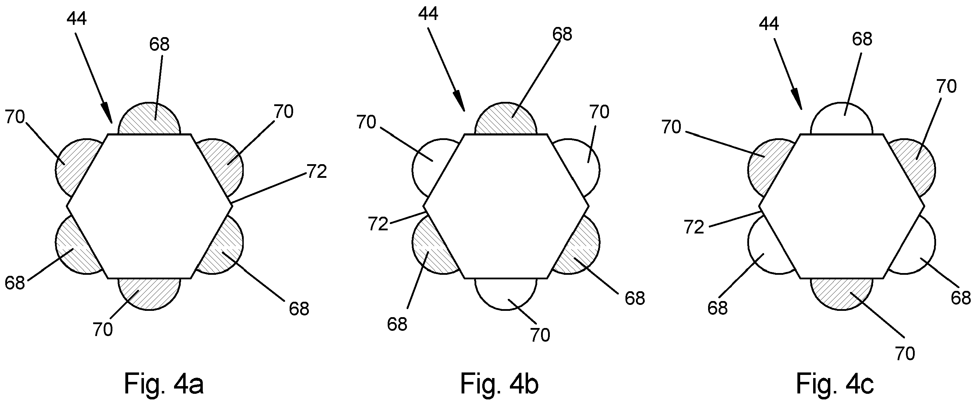

Fig. 4a zeigt in einer schematischen Prinzipskizze ein Ausführungsbeispiel des Leuchtfeuers 44 für das erfindungsgemäße Anemometer 10. Das Leuchtfeuer 44 umfasst beispielhaft zwei Leuchtgruppen 68, 70, welche aus LEDs bestehen. Die LED-Leuchtgruppen 68, 70 sind um eine im Schnitt sechseckige LED-Halterung 72 räumlich alternierend angeordnet. Beide LED-Leuchtgruppen 68, 70 leuchten in dieser Abbildung, was durch ihre Schraffierung kenntlich gemacht wird. Bei dieser gleichzeitigen Ansteuerung der Leuchtgruppen 68, 70 kann bei Bedarf die maximale Leuchtintensität des Leuchtfeuers 44 erreicht werden. Im Normalbetrieb reicht aber die halbe Leistung, was LEDs und Akkumulator 42 schont.

Fig. 4b zeigt gemäß Fig. 4a die zwei abwechselnden Leuchtgruppen 68, 70 um die sechseckige LED-Halterung 72 angeordnet, bei denen nur die LEDs der ersten Leuchtgruppe 68 leuchten. Das Leuchten der ersten LED-Leuchtgruppe 68 wird wiederum durch die Schraffierung kenntlich gemacht. Die LEDs der zweiten Leuchtgruppe 70 sind ausgeschaltet und daher ohne Schraffierung dargestellt.

Fig. 4c zeigt gemäß Fig. 4a bzw. 4b die zwei räumlich alternierenden Leuchtgruppen 68, 70 bei denen nur die zweite Leuchtgruppe 70 leuchtet. Auch hier ist die leuchtende Leuchtgruppe 70 dementsprechend schraffiert kenntlich gemacht. Fig. 4b und 4c zeigen einerseits eine energiesparende Variante, da jeweils nur eine der Leuchtgruppen 68 oder 70 angesteuert werden. Andererseits lässt sich so auch ein Reservebetrieb realisieren, im Falle, dass eine der Leuchtgruppen 68 oder 70 ausfällt.

### Bezugszeichenliste

| | | | |
|---|---|---|---|
| 10 | Anemometer | 56 | Zweites Ende |
| 12 | Windrad | 58 | Befestigungsflansch |
| 14 | Windaufnahmemittel | 60 | Befestigungsmittel |
| 16 | Gehäuse | 61 | Schwenkachse |
| 17 | Drehkreisebene | 62 | Pendelgewicht |
| 18 | Rotationsachse | 64 | Stab |
| 20 | Welle | 66 | Boden |
| 22 | Befestigungsmitteln | 68 | Erste LED-Leuchtgruppe |
| 24 | halbkugelartigen Schalen | 70 | Zweite LED-Leuchtgruppe |
| 26 | Speichen | 72 | Sechseckige LED-Halterung |
| 28 | Nabe | | |
| 30 | Offene Seiten | | |
| 32 | Oberer Gehäuseabschnitt | | |
| 34 | Unterster Gehäuseabschnitt | | |
| 36 | Mittlerer Gehäuseabschnitt | | |
| 38 | Zentraler Hauptkörper | | |
| 40 | Elektronik | | |
| 42 | Akkumulatoren | | |
| 43 | Erfassungsmittel | | |
| 44 | Leuchtmittel | | |
| 46 | Spannungsquelle | | |
| 47 | Dämmerungssensor | | |
| 48 | Solarmodul | | |
| 49 | Schnittstelle | | |
| 50 | Schwenkvorrichtung | | |
| 52 | Zylinderförmigen Körper | | |
| 54 | Erstes Ende | | |

## Patentansprüche

1. Anemometer (10) zum Messen von Windgeschwindigkeiten enthaltend:
a) ein Gehäuse (16) und/oder Rahmen,
b) eine Welle (20), welche drehbar in einem Lager des Gehäuses (16) und/oder Rahmen gelagert ist,
c) Windaufnahmemittel (14), welche an der Welle (20) angeordnet sind, wobei die Windaufnahmemittel (14) die Welle (20) bei Wind in Rotation versetzt,
d) Erfassungsmittel (43) zur Erfassung der Rotationsgeschwindigkeit (ω) der Welle (20),
e) Ausgabemittel (49) zur Ausgabe der so erfassten Rotationsgeschwindigkeit (ω),
f) wobei das Gehäuse (16) und/oder der Rahmen wenigstens ein elektrisches Leuchtmittel (44) als Signalleuchte aufweisen, wobei das Leuchtmittel (40) für den Betrieb mit Spannung einer Spannungsquelle (46) versorgt wird,
**dadurch gekennzeichnet, dass**
g) Befestigungsmittel (60) zur Befestigung an einem bewegbaren Objekt vorgesehen sind,
h) eine Schwenkvorrichtung (50) mit einer horizontalen Schwenkachse vorgesehen ist, um welche das Anemometer (10) schwenkbar gelagert ist, wobei ein Pendelgewicht (62) als Gegengewicht vorgesehen ist, und wobei das Anemometer (10) so ausgestaltet ist, dass es mit dem Befestigungsmittel (60) über die Schwenkvorrichtung (50) an dem bewegbaren Objekt befestigbar ist.

2. Anemometer (10) zum Messen von Windgeschwindigkeiten nach Anspruch 1, **dadurch gekennzeichnet, dass** das Anemometer (10) als Schalensternanemometer ausgebildet ist, wobei die Windaufnahmemittel (12) als halbkugelartige Schalen (18) ausgebildet sind.

3. Anemometer (10) zum Messen von Windgeschwindigkeiten nach Anspruch 1, **dadurch gekennzeichnet, dass** das Anemometer (10) als Flügelrad- Anemometer ausgebildet ist, wobei die Windaufnahmemittel (12) als flügel- oder turbinenartige Schaufel ausgebildet sind.

4. Anemometer (10) zum Messen von Windgeschwindigkeiten nach einem der Ansprüche 1 bis 3, **dadurch gekennzeichnet, dass** das Leuchtmittel (40) als LED ausgebildet ist.

5. Anemometer (10) zum Messen von Windgeschwindigkeiten nach einem der Ansprüche 1 bis 4, **dadurch gekennzeichnet, dass** das Leuchtmittel (44) mehrfarbig leuchtend ausgestaltet ist.

6. Anemometer (10) zum Messen von Windgeschwindigkeiten nach einem der Ansprüche 1 bis 5, **dadurch gekennzeichnet, dass** elektronische Steuerungsmittel (40) vorgesehen sind, die die Leuchtdauer und Farbe des Leuchtmittels steuern.

7. Anemometer (10) zum Messen von Windgeschwindigkeiten nach einem der Ansprüche 1 bis 6, **dadurch gekennzeichnet, dass** wenigstens zwei Leuchtmittel vorgesehen sind, welche gleichzeitig oder wechselseitig angesteuert werden.

8. Anemometer (10) zum Messen von Windgeschwindigkeiten nach einem der Ansprüche 1 bis 7, **dadurch gekennzeichnet, dass** die Spannungsquelle (46) einen Akkumulator (42) umfasst.

9. Anemometer (10) zum Messen von Windgeschwindigkeiten nach einem der Ansprüche 1 bis 8, **dadurch gekennzeichnet, dass** die Spannungsquelle (46) ein Solarmodul (48) zur Spannungserzeugung enthält.

10. Anemometer (10) zum Messen von Windgeschwindigkeiten nach einem der Ansprüche 1 bis 9 **gekennzeichnet durch** einen Dämmerungs- und/oder Näherungssensor zur Betätigung des Leuchtmittels.

## Claims

1. An anemometer (10) for measuring wind speeds, comprising:
a) a housing (16) and/or frame,
b) a shaft (20), which is rotatably mounted in a bearing of the housing (16) and/or frame,
c) wind-receiving means (14), which are arranged on the shaft (20), wherein the wind-receiving means (14) set the shaft (20) into rotation when exposed to wind,
d) detection means (43) for detecting the rotation speed (ω) of the shaft (20),
e) output means (49) for outputting the rotational speed (w) detected in this way,
f) wherein the housing (16) and/or the frame has at least one electric light means (44) as a signal light, wherein the light means (44) is supplied for operation with voltage from a voltage source (46),
**characterized in that**
g) fastening means (60) are provided for fastening to a movable object,
h) a pivoting device (50) with a horizontal pivot axis is provided, about which the anemometer (10) is pivotably mounted, wherein a pendulum weight (62) is provided as a counterweight, and wherein the anemometer (10) is configured such that it is attachable to the movable object by means of the fastening means (60) via the pivoting device (50).

2. Anemometer (10) for measuring wind speeds according to claim 1, **characterized in that** the anemometer (10) is designed as a cup-star anemometer, wherein the wind-receiving means (12) are formed as hemispherical cups (18).

3. Anemometer (10) for measuring wind speeds according to claim 1, **characterized in that** the anemometer (10) is designed as a vane-wheel anemometer, wherein the wind-receiving means (12) are formed as blade- or turbine-like vanes.

4. Anemometer (10) for measuring wind speeds according to any one of claims 1 to 3, **characterized in that** the light means (40) is designed as an LED.

5. Anemometer (10) for measuring wind speeds according to any one of claims 1 to 4, **characterized in that** the light means (44) is designed to emit in multiple colours.

6. Anemometer (10) for measuring wind speeds according to any one of claims 1 to 5, **characterized in that** electronic control means (40) are provided, which control the illumination duration and the colour of the light means.

7. Anemometer (10) for measuring wind speeds according to any one of claims 1 to 6, **characterized in that** at least two light means are provided, which are actuated simultaneously or alternately.

8. Anemometer (10) for measuring wind speeds according to any one of claims 1 to 7, **characterized in that** the voltage source (46) comprises an accumulator (42).

9. Anemometer (10) for measuring wind speeds according to any one of claims 1 to 8, **characterized in that** the voltage source (46) includes a solar module (48) for generating voltage.

10. Anemometer (10) for measuring wind speeds according to any one of claims 1 to 9, **characterized by** a dusk sensor and/or a proximity sensor for actuating the light means.

## Revendications

1. Anémomètre (10) destiné à mesurer des vitesses de vent, comprenant :
a) un boîtier (16) et/ou un cadre,
b) un arbre (20), lequel est monté rotatif dans un palier du boîtier (16) et/ou du cadre,
c) des moyens de réception du vent (14), qui sont disposés sur l'arbre (20), les moyens de réception du vent (14) mettant l'arbre (20) en rotation sous l'effet du vent,
d) des moyens de détection (43) pour détecter la vitesse de rotation (w) de l'arbre (20),
e) des moyens de sortie (49) pour délivrer la vitesse de rotation (w) ainsi détectée,
f) où le boîtier (16) et/ou le cadre présentent au moins un moyen lumineux électrique (44) en tant que feu de signalisation, où le moyen lumineux (40) est alimenté pour son fonctionnement par une tension d'une source de tension (46),
**caractérisé en ce que**
g) des moyens de fixation (60) pour la fixation à un objet mobile sont prévus,
h) un dispositif de pivotement (50) avec un axe de pivotement horizontal est prévu, autour duquel l'anémomètre (10) est monté pivotant, où un poids pendulaire (62) est prévu comme contrepoids, et où l'anémomètre (10) est conçu de manière qu'il est fixable à l'objet mobile au moyen du dispositif de fixation (60) via le dispositif de pivotement (50).

2. Anémomètre (10) pour mesurer des vitesses de vent selon la revendication 1, **caractérisé en ce que** l'anémomètre (10) est conçu comme un anémomètre à étoiles à coupelles, les moyens de réception du vent (12) étant formés comme des coupelles hémisphériques (18).

3. Anémomètre (10) pour mesurer des vitesses de vent selon la revendication 1, **caractérisé en ce que** l'anémomètre (10) est conçu comme un anémomètre à roue à pales, les moyens de réception du vent (12) étant formés comme des pales en forme d'aile ou de turbine.

4. Anémomètre (10) pour mesurer des vitesses de vent selon l'une des revendications 1 à 3, **caractérisé en ce que** le moyen lumineux (40) est conçu comme LED.

5. Anémomètre (10) pour mesurer des vitesses de vent selon l'une des revendications 1 à 4, **caractérisé en ce que** le moyen lumineux (44) est conçu émettant en plusieurs couleurs.

6. Anémomètre (10) pour mesurer des vitesses de vent selon l'une des revendications 1 à 5, **caractérisé en ce que** des moyens de commande électroniques (40) sont prévus, qui commandent la durée d'éclairage et la couleur du moyen lumineux.

7. Anémomètre (10) pour mesurer des vitesses de vent selon l'une des revendications 1 à 6, **caractérisé en ce que** au moins deux moyens lumineux sont prévus, qui sont actionnés simultanément ou alternativement.

8. Anémomètre (10) pour mesurer des vitesses de vent selon l'une des revendications 1 à 7, **caractérisé en ce que** la source de tension (46) comprend un accumulateur (42).

9. Anémomètre (10) pour mesurer des vitesses de vent selon l'une des revendications 1 à 8, **caractérisé en ce que** la source de tension (46) inclut un module solaire (48) pour la production de tension.

10. Anémomètre (10) pour mesurer des vitesses de vent selon l'une des revendications 1 à 9, **caractérisé par** un capteur de crépuscule et/ou un capteur de proximité pour l'activation du moyen lumineux.
